# EUROPEAN PATENT APPLICATION

(11) **EP 1 346 961 A1**
(43) Date of publication of application: **24.09.2003**
(21) Application number: 03005716.0
(22) Date of filing: 13.03.2003
(51) Int. Cl.: C03C 25/12, G02B 6/255, B29C 45/14, B29C 45/00

(54) **Recoating method and recoating apparatus for optical fiber**

(30) Priority: 15.03.2002 JP 2002071370; 30.08.2002 JP 2002253444
(71) Applicant: FUJIKURA Ltd., Tokyo (JP)
(72) Inventor: Kanai, Yoshinori, Sakura-shi, Chiba-ken (JP); Suzuki, Junichi, Sakura-shi, Chiba-ken (JP); Fujisawa, Manabu, Sakura-shi, Chiba-ken (JP)
(74) Representative: Weitzel, Wolfgang, Dr.-Ing.

(57) **Abstract**

The invention relates to a recoating method for optical fiber, and in particular to prevent incorporation of bubbles into the recoating resin. In a recoating method for optical fiber, a bare fiber portion of an optical fiber is recoated by guiding recoating resin into mold forms (11A, 11B), and the injection speed of the recoating resin injected into the mold forms is such that bubbles are not trapped due to the resin injection. This injection speed is preferably equal to or less than 6 mm/second.

## Description

### BACKGROUND OF THE INVENTION

### 1. Field of the Invention

The present invention relates to a recoating method for optical fiber wherein a resin sheath is recoated onto a part where the sheath of the optical fibber has been removed, and a recoating apparatus for the same, and in particular, relates to limiting the immixture of bubbles into a recoating resin and limiting the deterioration of the outward appearance and shape of the recoated part.

### 2. Description of the Related Art

After connecting optical fibers by fusion splicing or after removing a coating from a portion that needs to have it removed, a portion of the fiber in which the coating was removed (a bare fiber portion) must be coated with resin again for the sake of protection. That is, it must be recoated.

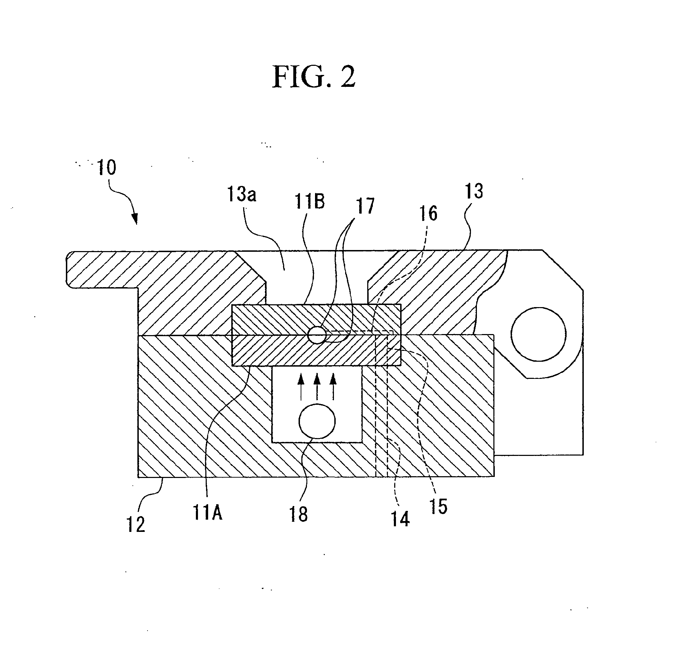

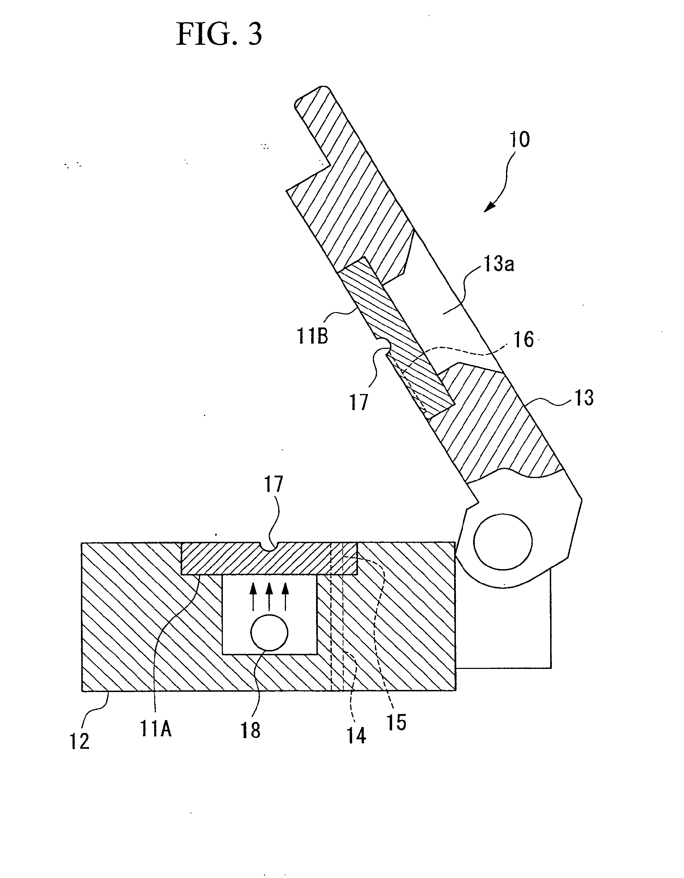

Several methods have already been proposed as recoating methods. The example shown in FIG. 2 and FIG. 3 is a method using a recoating apparatus. In this method, recoating of the fiber is carried out by injecting a recoating resin into a glass mold (the mold method).

This recoating apparatus 10 comprises a pair of plate shaped mold forms (the forms which are made of a glass material such as silica glass which is normally transparent and has superior light transparency) 11A, 11B which are divided into an upper part and a lower part. These mold forms 11A, 11B are disposed between a base stand 12 and a lid 13 which is installed in the base stand 12 so that it can be opened and closed. In addition, the recoating resin (normally a UV cured resin) is injected into semicircular mold grooves (U groove) 17 in the mold forms 11A, 11B through resin injection paths 14, 15 which are composed of small holes formed in the base stand 12 and the lower mold form 11A, and a shallow slit-shaped resin guide path 16 is formed in the upper mold form 11B.

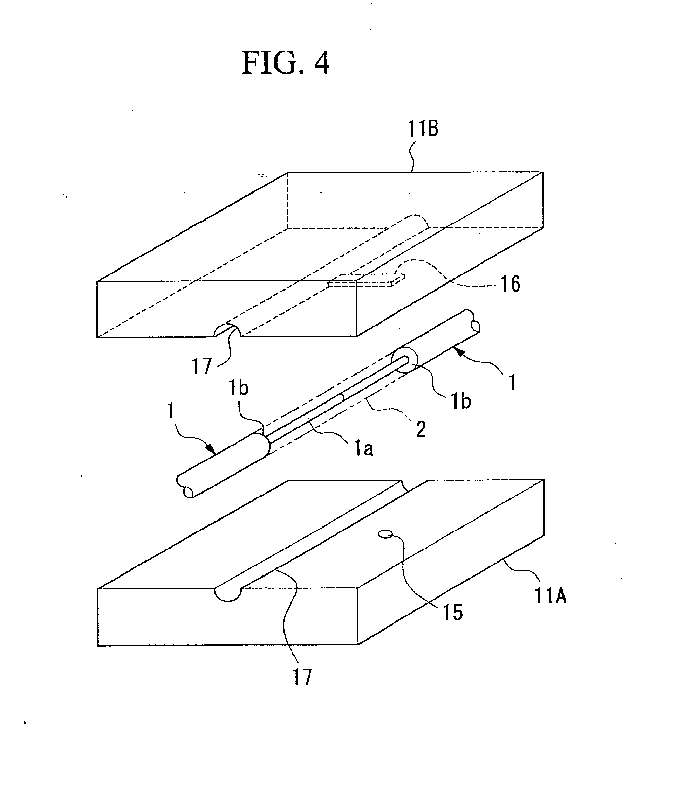

As shown in FIG. 4, the length of each of the mold grooves 17 is set, for example, so as to be longer than the portion of a bare fiber portion 1a of the optical fiber that was spliced by heat fusion splicing.

Therefore, when this optical fiber 1 is set in each of the mold grooves 17 of the mold forms 11A, 11B, a substantially closed cylindrical space (mold space) is formed around the bare fiber portion 1 a. Then, a recoating sheath 2, that is, a molded part, is formed by injecting the above described recoating into the mold space.

Here, when a resin curing device 18 such as a UV lamp is disposed on the base stand 12 side, for example, the curing of the resin is promoted by irradiating the UV light, and thus a quick mold becomes possible.

However, in this recoating method using such recoating apparatus 10, during the injection of the recoating resin, there is the case that bubbles are trapped into the resin or the resin is hardened by the irradiation of UV light while it is flowing, depending on the injection speed; and as a result, the problem that the shape of the resin of the recoated portion is deteriorated may occur. Of course, when bubbles are trapped or the shape is deformed, the optical transmission properties of the optical fiber 1 become inferior.

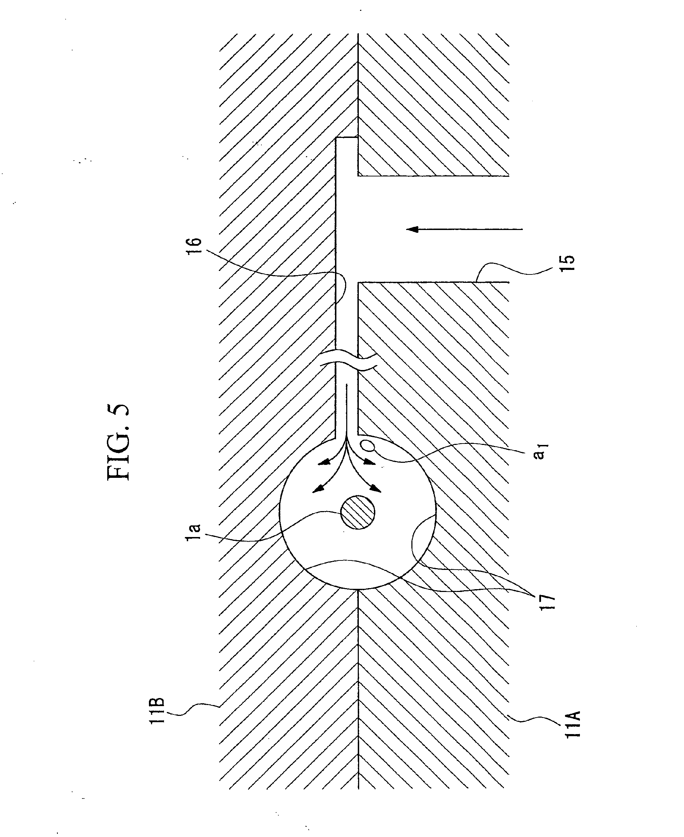

The present inventors carried out investigations of the conditions such as immixture of the bubbles and deformation of the shape, and obtained the following conclusions. First, when the injection speed of the recoating resin is too fast, as shown in FIG. 5, it was discovered that a turbulent flow of the resin occurs in proximity to the resin guide path 16 which forms a narrow path portion of the mold form 11B, and in particular, in proximity to the discharge opening to the mold grooves 17, and that bubbles a₁ are easily trapped in the resin. In particular, when the injection speed exceeds 6 mm/second, it is discovered that the generation of bubbles a₁ is conspicuous.

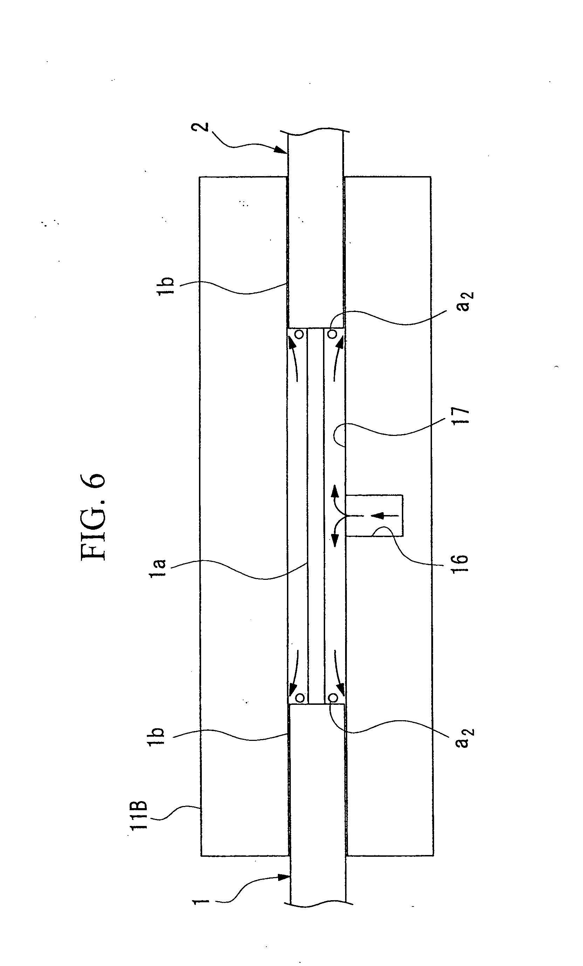

In addition, as shown in FIG. 6, when the injection speed of the recoating resin flowing into the mold space in the mold grooves 17 is too fast, it was discovered that the discharge of residual air in the mold space is not carried out smoothly when the resin arrives at the tip portion of the recoated sheath 2, and the bubbles a₂ would be easily retained at the end face of fiber coating parts 1b of the optical fiber 1, that is, in proximity to the tip portion of the recoated sheath 2. In this case, when the injection speed exceeded 6 mm/second, it is understood that the retention of bubbles a₂ is conspicuous as well as the case described above.

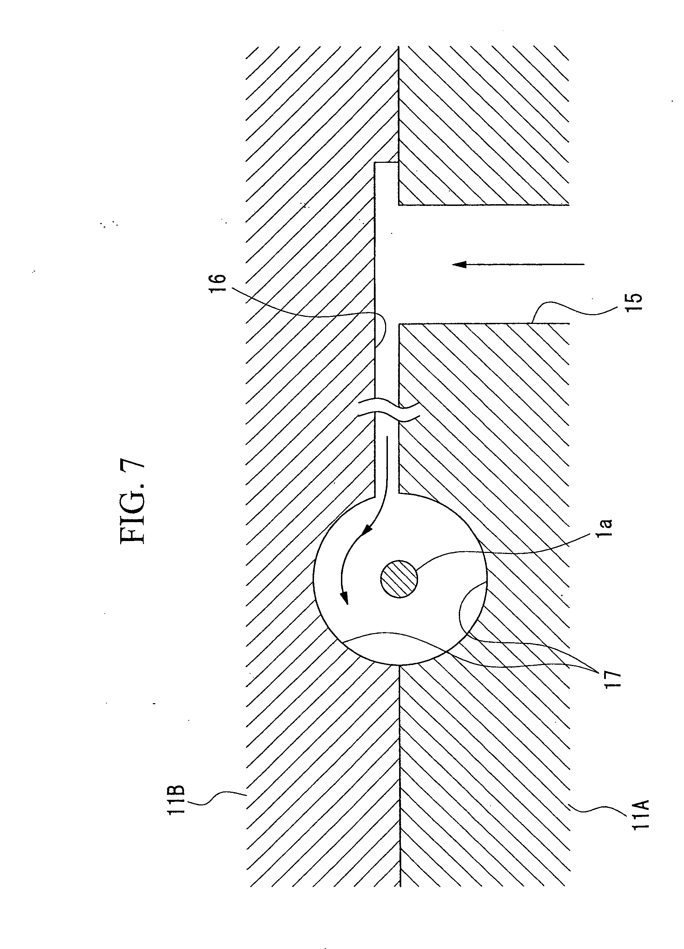

Furthermore, conventionally, the curing of the resin is immediately carried out after completion of the recoating resin injection by irradiating UV light. However, in this case, the outward shape of the recoated resin is deteriorated. After researching the cause of this phenomenon, it was discovered that even if the injection was stopped, the flow did not immediately stop, but rather a part of the resin continued to flow slightly. This phenomenon could be frequently observed in proximity to the discharge opening of the resin guide path 16 which forms a narrow path as shown in FIG. 7, for example.

Thus, when the recoating resin in a portion still flowing is irradiated with UV light, the curing of the resin in this flowing portion occurs with difficulty, and appears as a distortion in the shape. After researching this point in more detail, it was discovered that when UV light is irradiated after the passage of a certain time interval after the completion of the injection of the recoating resin, more preferably after the passage of 2 seconds, the deformation of the shape can be effectively prevented.

In consideration of the above, an object of the present invention is to provide a recoating method for optical fiber wherein the incorporation of bubbles into the resin and the deterioration of external shape of the resin can be maximally suppressed principally by regulating the injection speed of the recoating resin and the irradiation timing of the curing light on the resin, and a recoating apparatus that can implement this method.

### SUMMARY OF THE INVENTION

A first aspect of the present invention is a recoating method for optical fiber in which recoating of a bare fiber portion of an optical fiber is carried out by guiding a recoating resin into two molds forms, wherein the injection speed of the recoating resin injected into mold grooves in the mold forms is set as a speed at which bubbles are not trapped due to the resin injection.

In this recoating method for optical fiber, it is preferable that the above injection speed is equal to or less than 6 mm/second.

A second aspect of the present invention is a recoating method for optical fiber in which recoating of a bare fiber portion of an optical fiber is carried out by guiding a recoating resin into two molds forms, wherein the injection speed of the recoating resin that is injected into the mold grooves of the mold forms is reduced to equal to or less than 6 mm/second while the recoating resin is injected in proximity to a position corresponding to a tip of a recoated sheath which is made of the recoating resin.

A third aspect of the present invention is a recoating method for optical fiber in which recoating of a bare fiber portion of an optical fiber is carried out by guiding a recoating resin into two mold forms, wherein curing light is irradiated from a resin curing device after passage of an appropriate time interval following completion of the injection of the recoating resin into the mold grooves of the mold forms.

In this recoating method for optical fiber, it is preferable that the above time interval is equal to or greater than 2 seconds.

A fourth aspect of the present invention is a recoating apparatus that implements the recoating method described above. The recoating apparatus comprises a plate-shaped optically transparent mold divided into upper and lower mold forms. Semicircular mold grooves are provided on the abutment face side of the upper and lower mold forms, and a slit-shaped resin guide path that leads to the mold grooves is provided on the abutment face side of one of the mold forms. Furthermore, a resin injection path comprising a small hole that communicates with the slit shaped resin guide path is provided on one of the mold forms, and a resin curing device that irradiates UV light is provided on a side of one of the mold forms. In this apparatus, a recoating of an optical fiber is performed by the following steps; installing the optical fiber having a bare fiber portion whose length is shorter that that of the mold grooves between the semicircular mold grooves, injecting a recoating resin around the bare fiber portion through the resin injection path and the resin guide path, and irradiating a UV light by the resin curing device. Furthermore, the recoating apparatus is characterized by implementing the recoating method which is described in the above first, second, or third aspects.

In this recoating apparatus, it is preferable that the plate-shaped optically transparent mold is made of silica glass.

Furthermore, in the recoating apparatus as described above, it is preferable that the upper and lower mold forms are disposed between a base stand and a lid installed thereon and can be opened and closed, and a resin injection path comprising a small hole which communicates with the resin injection path of the mold forms is provided on either the base stand or the lid.

### BRIEF DESCRIPTION OF THE DRAWINGS

FIG. 1 is a flow chart which showing an example of the recoating method for optical fiber according to the present invention.
FIG. 2 is a partial cross-sectional view of the recoating apparatus for optical fiber.
FIG. 3 is a partial cross-sectional view of the state wherein the lid in the recoating apparatus of FIG. 2 is open.
FIG. 4 is an exploded perspective drawing which showing the relationship between the mold forms and the bare fiber portion of the optical fiber in the recoating apparatus of FIG. 2.
FIG. 5 is a partial enlarged drawing of the recoating apparatus of FIG. 2 which showing the injection condition of a recoating resin in proximity to a resin guide path of mold forms.
FIG. 6 is a partial enlarged drawing of the recoating apparatus of FIG. 2 which showing the injection condition of the recoating resin in a position corresponding to a tip of a recoated sheath which is made of the recoating resin.
FIG. 7 is a partial enlarged drawing of the recoating apparatus of FIG. 2 which showing the injection condition of the recoating resin in proximity to the resin guide path of the mold forms.

### DETAILED DESCRIPTION OF THE PREFERRED EMBODIMENTS

The recoating method for optical fiber according to the present invention is not particularly limited. However, for example, can be implemented by the recoating apparatus 10 as shown in the above described FIGS. 2 and 3.

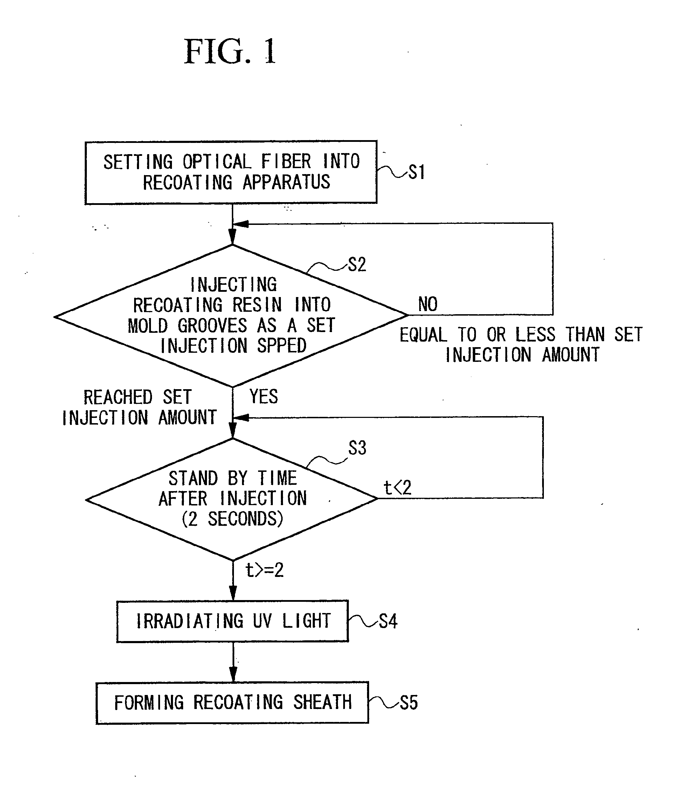

The procedure will be described with FIG. 1. First, in the present invention, in step S1, the object optical fiber 1 is set in the mold grooves 17 of the mold forms 11A, 11B of the recoating apparatus 10. Thereby, a substantially closed cylindrical mold space is formed around the bare fiber portion 1 a of the optical fiber 1 by the mold grooves 17.

Next, in step S2, a recoating resin is injected into the mold space between the mold grooves 17 through the resin injection paths 14, 15 of the base stand 12 and the lower mold form 11A, and the resin guide path 16 of the upper mold form 11B.

At this time, the injection speed of the recoating resin is equal to or less than 6 mm/second. This speed is maintained until a set injection amount of the recoating resin is attained depending on the volume of the mold space.

Meanwhile, in the conventional recoating method, the injection speed of the resin is usually carried out at about 8 to 10 mm/second.

By carrying out the injection as such a slow injection speed, in the portion shown in FIGS. 5 and 6 (the portion at the proximity of the discharge opening of the resin guide path 16 in the mold form 11B and the end face edge of the fiber covering parts 1b of the optical fiber 1, that is, in proximity to the tip portion of the recoated sheath 2), the incorporation of bubbles a₁ and a₂ are efficiently limited. The reason is thought to be that; first, because the injection sped is slow, the generation of significant turbulence in proximity to the discharge opening of the resin guide path 16 is suppressed, and thus little air is trapped, and the retention of bubbles a₁ can be suppressed. In addition, in proximity to the end of the recoating sheath 2, it is thought that a clearance is created in which the air retained as bubbles a₂ can escape from between the abutting faces of the mold forms 11A, 11B and from the gap between the mold grooves 17 and the fiber covering part 1b of the optical fiber 1 because the injection sped is slow. Moreover, in the case that the injection speed in proximity to the discharge opening of the resin guide path 16 is equal to or less than 6 mm/second, the injection speed in proximity to the end of the recoating sheath 2 which is positioned relatively apart from the discharge opening is smaller than the injection speed in proximity to the discharge opening, and thus no impediment is caused by the difference of the injection speed in the mold forms 11A, 11B.

Subsequently, when the recoating resin attains the set injection amount, the resin injection is stopped, and at the same time, in step S3, it is rested for a predetermined time interval, and next, in step S4, it is irradiated with UV light by a resin curing device 18 such as a UV lamp. Thereby, the recoating resin is cured. As a result, in step S5 an optical fiber 1 having a predetermined recoating sheath 2 over the bare fiber portion 1 a is obtained.

The above time interval (resting time) is equal to or greater than 2. That is, if UV light is irradiated following the passage of 2 seconds or more after the resin injection is stopped, at nearly all parts of the injection recoating resin, for example, the part (in proximity to the resin guide path 16) shown in FIG. 7, the flow of the resin is almost completely stopped, and thus the curing of the resin can be carried out evenly, and a well shaped recoating sheath 2 is obtained that has any deformations of the shape of the external appearance effectively suppressed.

Here, the reason that the time interval is 2 seconds or greater is that when the time interval is approximately 2 seconds, the flow of the recoating resin is stopped in almost all parts.

### Example

Using the recoating apparatus shown in FIGS. 2 and 3, a recoating sheath for an optical fiber is formed with an injection speed for the recoating resin that satisfies the conditions of the present invention or with an injection speed for the recoating resin that fails to satisfy the conditions of the present invention. The state of incorporation of the bubbles a₁ in the resin guide path 16 of the mold form 11B shown in FIG. 5 and the bubbles a₂ in proximity to the end of the recoating sheath 2 shown in FIG. 6 are shown in Table 1.

Moreover, the inner diameter of the resin injection path 15 of the lower mold form 11 A was about 1 mm, the width of the resin guide path 16 in the mold form 11B was about 4 mm, the height thereof was 0.05 mm, and the recoating resin that was used was a UV cured resin, and the injection temperature was 20° C.

**Table 1**

| | Injection speed (mm/second) | Presence or absence of bubbles (a₁) | Presence or absence of bubbles (a₂) |
|---|---|---|---|
| Example 1 | 2 | Absent | Absent |
| Example 2 | 4 | Absent | Absent |
| Example 3 | 6 | Absent | Absent |
| Comparative example 1 | 8 | Present | Present |
| Comparative example 2 | 10 | Present | Present |

From Table 1, it can be understood that when the injection speed of the recoating resin was equal to or less than 6 mm/sec (examples 1 to 3), the incorporation of bubbles a₁ and a₂ could not be observed. In contrast, when the injection speed became large, exceeding 6 mm/sec, the incorporation of bubbles a₁ and a2 became significant.

Using the recoating apparatus shown in FIGS. 2 and 3, a recoating sheath for an optical fiber was formed by irradiating UV light after passage of a resting time that satisfied the conditions of the present invention or a resting time that failed to satisfy the conditions of the present invention. The external appearance and shape of the deformation of the recoating sheath is shown in Table 2.

Moreover, the inner diameter of the resin injection path 15 of the lower mold form 11A was about 1 mm, the width of the resin guide path 16 in the mold form 11B was about 4 mm, the height thereof was 0.05 mm, and the recoating resin that was used was a UV curing resin, and the injection temperature was 20° C.

**Table 2**

| | Resting time (seconds) | Presence or absence of deformation of external appearance |
|---|---|---|
| Example 1 | 2.0 | Absent |
| Example 2 | 4.0 | Absent |
| Comparative Example 1 | 0.5 | Present |
| Comparative Example 2 | 1.0 | Present |

From Table 2, it can be understood that when the resting time was equal to or greater than 2 seconds (examples 1 and 2), deformation in the shape of the external appearance was not observed. In contrast, when the resting time was less than 2 seconds (comparative examples 1 and 2), deformation in the shape of the external appearance was significant.

Moreover, the above examples were implemented using the recoating apparatus 10 shown in FIGS. 2 and 3 as a preferred embodiment, however, the present invention is not limited thereby.

For example, a recoating apparatus having the following structures can be used for the present invention. This recoating apparatus comprises transparent plate-shaped mold divided into upper and lower mold forms 11A, 11B, and provides the semicircular mold grooves 17 on the abutting faces of the upper and lower mold forms 11A, 11B and provides a slit-shaped resin guide path 16 that connects to the mold grooves 17 on one of the abutting faces of the mold forms 11A and 11B. Furthermore, a resin injection path 15 comprising a small hole which communicates with the slit-shaped resin guide path 16 is provided on either one of the mold forms 11A, 11B, and a resin curing device 18 that irradiates UV light is provided on a side of either one of the mold forms 11A, 11B. During recoating, an optical fiber 1 having a bare fiber portion 1a whose length is shorter than that of the mold grooves 17 is inserted between the semicircular mold grooves 17. Then the recoating resin is injected around the bare fiber portion 1 a of the optical fiber through the resin injection path 15 and the resin guide path 16, and irradiated by the resin curing device 18. Using this structure as well, a recoating sheath 2, that is, a molded part, is formed because a substantially closed semicircular mold space is formed around the bare fiber portion 1a due to the injection of the recoating resin.

Here, the injection speed of the recoating resin is such that bubbles to not become trapped due to the resin injection, that is, a speed equal to or less than 6 mm/second, and the injection speed in proximity to the end of the recoating sheath of the recoating resin injected into the mold grooves 17 is equal to or less than 6 mm/second. After completion of the injection of the recoating resin into the mold grooves 17, following passage of an appropriate time interval, for example, 2 seconds, the curing light is irradiated from the resin curing device 18. Thereby, the recoating method of the present invention can be easily implemented.

Furthermore, in this recoating apparatus, if the transparent plate-shaped mold is made of silica glass, the insertion state of the optical fiber 1 and the bare fiber portion 1a can be visually inspected from the outside.

In addition, if the upper and lower mold forms 11A, 11B are provided between the base stand 12 and the lid 13 which is installed in the base stand 12 so that it can be opened and closed, and the resin injection path 14 that comprises a small hole which communicated with the resin injection path 15 of the mold form 11A is provided in either the base stand 12 or the lid 13, the recoating operation can be carried out easily and quickly by opening and closing the lid 13.

Furthermore, if an observation window 13a for viewing the mold form 11B is provided on the lid 13, even when the lid is not transparent, it is possible to visually inspect the optical fiber 1 on the mold forms 11A, 11B side from the outside using the observation window 13a.

Furthermore, in the case of the example described above, the recoating apparatus that injects recoating resin into a mold groove can be broadly implemented by other apparatuses. In addition, the setting position of the resin curing device 18 such as a UV lamp is not limited to the recoating apparatus 10 described above.

As is clear from the above explanation, the following superior effects are obtained by the recoating method for optical fiber of the present invention and the recoating apparatus for implementing the same.
1. Since the injection speed of the recoating resin is set at a speed at which bubbles to not get trapped due to the resin injection, that is, preferably 6 mm/sec, the incorporation of bubbles during resin injection can be effectively suppressed.
2. Since the injection speed in proximity to the end of the recoating sheath of the recoating resin is reduced to 6 mm/sec or less, the incorporation of bubbles by the recoating resin that reaches the end of the recoating sheath can be effectively suppressed.
3. In addition, since curing light is irradiated from the resin curing device after completion of the injection of the recoating resin, following the passage of an appropriate time interval, preferably equal to or greater then 2 seconds, substantially uniform curing is carried out in each part of the resin, and a recoating sheath having a clean external appearance can be obtained.
4. In addition, since the transparent plate-shaped mold is made of silica glass, the state of insertion of the optical fiber and the like can be visually inspected from the outside.
5. In addition, since the upper and lower mold forms are disposed between a base stand and a lid and the recoating resin is injected, by opening and closing the lid, the recoating operation can be carried out simply and quickly.

## Claims

1. A recoating method for optical fiber in which a recoating of a bare fiber portion (1a) of an optical fiber (1) is carried out by guiding a recoating resin into mold forms (11A, 11B), comprising a step of:
setting injection speed of said recoating resin that is injected into said mold forms to a speed at which bubbles are not trapped due to this resin injection.

2. A recoating method for optical fiber according to claim 1 wherein said injection speed is equal to or less than 6 mm/second.

3. A recoating method for optical fiber in which the recoating of a bare fiber portion (1a) of an optical fiber (1) is carried out by guiding a recoating resin into mold forms (11A, 11B), comprising a step of:
reducing the injection speed of said recoating resin that is injected into said mold forms to equal to or less than 6 mm/sec while said recoating resin is injected in proximity to a position corresponding to a tip of a recoated sheath (2) which is made of said recoating resin.

4. A recoating method for optical fiber in which a recoating of a bare fiber portion (1a) of an optical fiber (1) is carried out by guiding a recoating resin into mold forms (11A, 11B), comprising steps of:
irradiating curing light from a resin curing device (18) after passage of an appropriate time interval following completion of an injection of said recoating resin into said mold forms.

5. A recoating method for optical fiber according to claim 4 wherein said time interval being equal to or greater than 2 seconds.

6. A recoating apparatus that implements the recoating method according to one of claims 1, through 4; the recoating apparatus comprises:
a plate-shaped optically transparent mold divided into upper and lower mold forms (11A, 11B);
semicircular mold grooves (17) which are provided on abutment face sides of said upper and lower mold forms;
a slit-shaped resin guide path (16) which is provided in one of the abutment faces of said mold forms and leads to said mold grooves;
a resin injection path (15) that communicates with the slit shaped resin guide path and is composed of a small hole which is provided on either one of said mold forms; and
a resin curing device (18) that irradiates UV light is provided on a side of either one of said mold forms;
and wherein; during a recoating of an optical fiber, the optical fiber (1) having a bare fiber portion (1a) whose length is shorter than that of said mold grooves is inserted between said semicircular mold grooves, a recoating resin is injected around the bare fiber portion of said optical fiber through said resin injection path and said resin guide path, and a UV light is irradiated by said resin curing device.

7. A recoating apparatus according to claim 6 wherein said plate-shaped optically transparent mold forms is composed of silica glass.

8. A recoating apparatus according to claim 6 or 7 wherein said upper and lower mold forms are disposed between a base stand (12) and a lid (13) which is installed in the base stand so that it can be opened and closed, and a resin injection path (14) comprising a small hole which communicates with the resin injection path of the mold forms is provided on either the base stand or the lid.
